# EUROPÄISCHE PATENTSCHRIFT

(11) **EP 2 295 348 B1**
(45) Veröffentlichungstag und Bekanntmachung des Hinweises auf die Patenterteilung: **29.06.2016**
(21) Anmeldenummer: 10173834.2
(22) Anmeldetag: 24.08.2010
(51) Int. Cl.: B65G 17/08, B65G 17/24, B65G 17/06, B65G 17/40

(54) **Förderkette**
Chain conveyor
Chaîne de transport

(30) Priorität: 09.09.2009 DE 102009040773
(43) Veröffentlichungstag der Anmeldung: 16.03.2011
(73) Patentinhaber: Krones AG, 93073 Neutraubling (DE)
(72) Erfinder: Krause, Hans-Joachim, 24977, Westerholz (DE)
(74) Vertreter: Grünecker Patent- und Rechtsanwälte PartG mbB

(56) Entgegenhaltungen:
- WO-A1-2007/034289
- DE-A1-102004 021 262
- GB-A- 868 464
- US-A- 2 987 168
- US-A- 3 220 535
- US-A- 3 866 743

## Beschreibung

Die Erfindung bezieht sich auf ein Förderband, insbesondere für einen Pasteur, der im Oberbegriff von Anspruch 1 erläuterten Art.

Ein derartiges Förderband ist aus der DE 10 2004 021 262 A1 bekannt. Das bekannte Förderband ist für einen endlosen Umlauf um zwei beabstandete Rollen ausgebildet und dient dazu, mit Füllgut gefüllte Behälter, beispielsweise Flaschen oder Gläser, durch einen Pasteur zu transportieren, wo durch Wärmeeinwirkung über eine bestimmte Zeit eine Pasteurisierung des Inhalts der Behälter erfolgt. Das bekannte Förderband ist aus einzelnen Segmenten aufgebaut, wobei jedes Segment einen oder mehrere Tragbügel aufweist, die miteinander zu einem Traggitter verbunden sind. Durch die Bügel erstrecken sich Stangen, die über die gesamte Breite quer zur Förderrichtung des Förderbandes reichen und sowohl die Segmente einer quer zur Förderrichtung verlaufenden Querreihe miteinander verbinden als auch als Scharnier für eine Relativbewegung der benachbarten Segmente in einer längs zur Förderrichtung laufenden Reihe dienen. Diese Stäbe dienen weiterhin als Lagerung für Abstützrollen, die unter ausgewählten Segmenten angeordnet sind und diese und somit das gesamte Förderband auf einem Träger abstützen. Auf der Oberseite der Bügel ist ein Kunststoffoberteil befestigt, das die Förderfläche bildet. Die Förderfläche wird durch einen geringen Abstand nebeneinander liegenden und hochkant angeordneten Kunststoffstege gebildet, deren Schmalseiten die Förderfläche bilden. Damit sichergestellt ist, dass die Behälter kippsicher auf der Förderfläche ruhen, sind die Abstände zwischen den Kunststoffstegen relativ schmal. Tritt nun innerhalb des Pasteurs ein Glasbruch auf, so können Glasscherben die Förderfläche schartig machen oder sich gar zwischen den Kunststoffstegen verkeilen, so dass das Förderband beschädigt wird.

Die US 3 220 535 A beschreibt ferner ein endloses Förderband mit plattenförmigen Fördersegmenten. Diese sind beidseitig an seitlichen Gleitblöcken oder Rollen gelagert und von seitlich außerhalb der Gleitblöcke bzw. Rollen angeordneten Ketten angetrieben. Die Fördersegmente des Förderbands sind quer zur Transportrichtung durchgehend ausgebildet.

Die WO 2007/034 289 A1 beschreibt ferner ein endloses Förderband mit in seitlicher Richtung durchgehenden Bandsegmenten, die über stationär gelagerte Walzen laufen.

Der Erfindung liegt die Aufgabe zugrunde, ein Förderband bereitzustellen, das weniger beschädigungsanfällig ist.

Die Aufgabe wird durch die im Anspruch 1 beschriebene Kombination der Merkmale gelöst.

Es hat sich überraschenderweise herausgestellt, dass die beim bekannten Förderband verwendeten Abstützrollen ohne weiteres auch das höhere Gewicht einer metallenen Förderfläche tragen können, ohne dass eine übermäßig erhöhte Antriebsenergie aufgewandt werden muss. Die Kombination der Abstützrollen mit einer Förderfläche aus Metall führt somit zu einem Förderband, das sehr gut mit Glasbruch umgehen kann, ohne dass die bisherigen Nachteile von Stahl- bzw. Metallförderbändern, d.h. ein hoher Bedarf an Antriebsenergie wegen des stark erhöhten Gewichtes, auftritt.

Vorteilhafte Weiterbildungen der Erfindung sind den Unteransprüchen zu entnehmen.

Die Verwendung von liegend angeordnetem Metallblech bildet eine sehr glatte Oberfläche, auf der die Behälter auch selbsttätig gut aufgeschoben werden können. Die Verwendung von Lochblech für die Förderfläche schafft ausreichend Abflussmöglichkeit, durch die über- bzw. ausgelaufene Flüssigkeit abgeführt werden kann.

Die Abstützrollen müssen nicht unbedingt unter jedem Segment vorgesehen sein, wobei bevorzugt die in Querrichtung außenliegenden Segmente durch die Rollen unterstützt werden.

Die Förderflächen benachbarter Segmente in Querrichtung liegen im Wesentlichen spaltfrei nebeneinander. Dies kann bevorzugt durch eine Querverbindungseinrichtung zwischen quer zur Förderrichtung benachbarten Segmenten erreicht werden. Alternativ oder zusätzlich können an den Enden von Gelenkwellen, die benachbarte Segmente in der Querreihe miteinander verbinden, Spanneinrichtungen vorgesehen sein.

Bevorzugt sitzen die Abstützrolle auch auf den Gelenkwellen.

Seitlich vorgesehene Abstütz- und Führungsbügel, die an in Förderrichtung hintereinanderliegenden Gelenkwellen angeordnet sind, sichern einen ruhigen und geraden Lauf des erfindungsgemäßen Förderbandes.

Ein Ausführungsbeispiel der Erfindung wird nachfolgend anhand der Zeichnungen näher erläutert. Es zeigen:
- Fig. 1: eine stark schematisierte perspektivische Teildarstellung eines Pasteurs mit erfindungsgemäßem Förderband,
- Fig. 2: eine perspektivische Draufsicht auf einen Teil des erfindungsgemäßen Förderbandes,
- Fig. 3: eine Ansicht des erfindungsgemäßen Förderbandes von unten,
- Fig. 4: eine Ansicht des erfindungsgemäßen Förderbandes in Förderrichtung,
- Fig. 5: eine vergrößerte Darstellung eines einzelnen Segmentes, und
- Fig. 6: das herausvergrößerte Detail A aus Fig. 3.

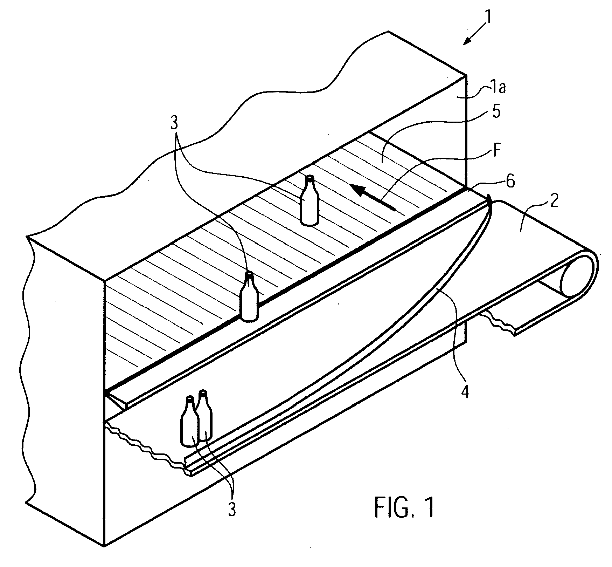

Fig. 1 zeigt in stark schematisierter, perspektivischer Darstellung den Einlaufbereich eines Pasteurs 1, der bis auf das Förderband herkömmlicher Art sein kann. Der Pasteur 1 wird über ein herkömmliches Förderband 2 beliefert, das Behälter 3, dargestellt sind Flaschen, zum Einlaufbereich 1a des Pasteurs 1 bringt. Die Behälter sind bevorzugt Glasbehälter, bei denen die anhand des Standes der Technik beschriebenen Probleme bei Glasbruch auftreten. Die Erfindung ist jedoch für Behälter aller Art einzusetzen und muss auch nicht unbedingt in einem Pasteur verwirklicht werden.

Auf dem Förderband 2 ist die übliche Einlaufschiene 4 vorgesehen, die die auf dem Förderband 2 ankommenden Behälter 3 in den Einlaufbereich 1a leitet. Im Pasteur 1 ist ein Förderband 5 vorgesehen, auf das die Behälter 3 vom Förderband 2 über ein Überschubblech 6 aufgeschoben werden. Das Überschubblech ist glatt, ohne Öffnungen und bevorzugt aus Federstahl. Durch das Förderband 5 werden anschließend die Behälter 3 in Förderrichtung F in den Pasteur hinein, durch ihn hindurch und am gegenüberliegenden Ende, wiederum über ein Überschubblech auf einen Abtransporteur gefördert.

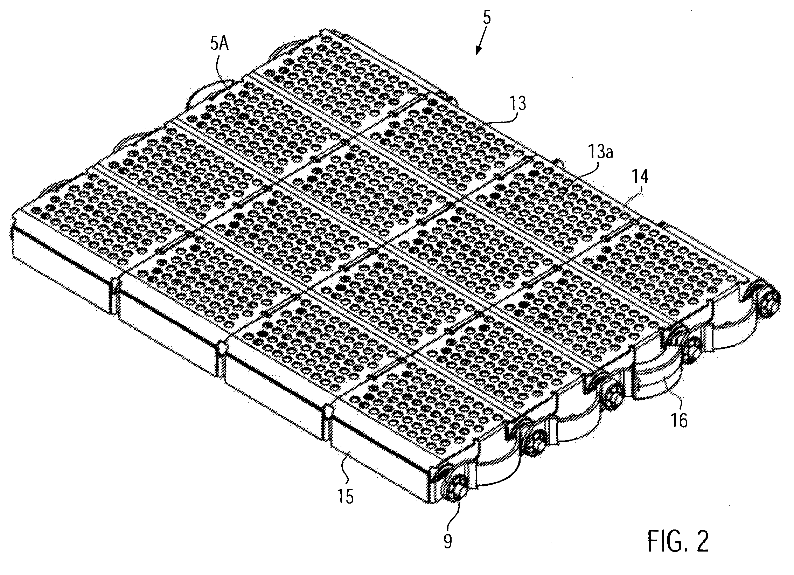

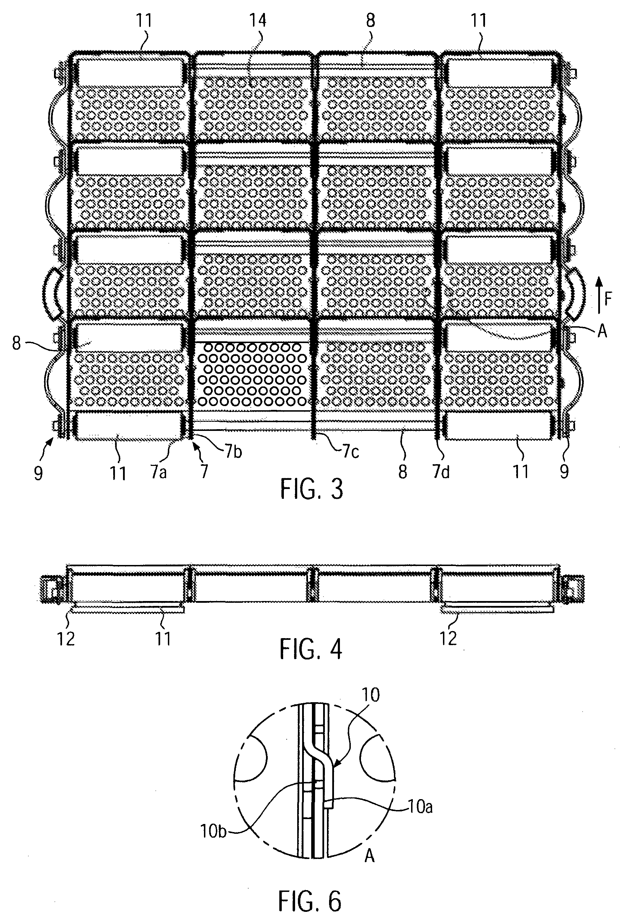

Das Förderband 5 im Inneren des Pasteurs ist in den Fig. 2 bis 6 näher erläutert. Das Förderband 5 ist aus einzelnen Segmenten 5A aufgebaut und weist ein Traggitter 7 aus einer Vielzahl miteinander vernetzter Bügel auf, wobei lediglich die Bügel 7a, 7b, 7c, 7d einer quer zur Förderrichtung F verlaufenden Querreihe mit Bezugszeichen gekennzeichnet sind. Die Bügel 7a bis 7d sind innerhalb der Querrichtung miteinander und in Förderrichtung, d.h. innerhalb der Längsreihen, mit benachbarten Bügeln vernetzt.

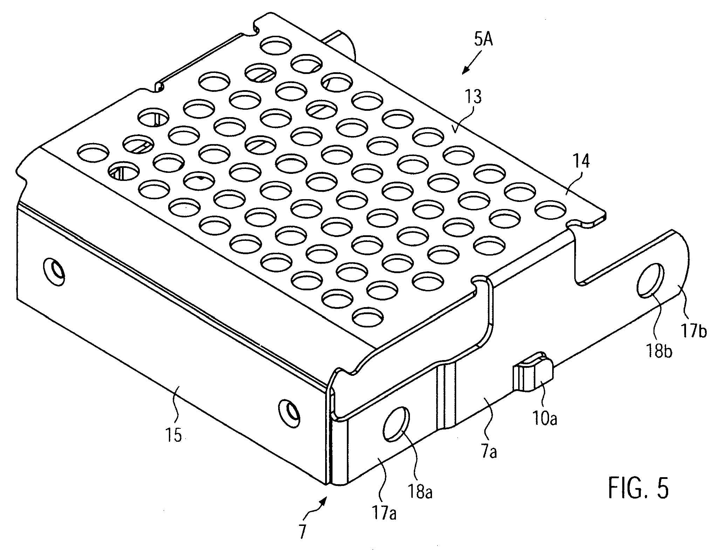

An den in Förderrichtung F vorderen und hinteren Bereichen 17a, 17b jedes Bügels wird der in Förderrichtung F vor- und nachlaufende Bügel der benachbarten Querreihe überlappt, wobei in den Überlappungsstellen jeweils eine Gelenkwelle 8 in Bohrungen 18a, 18b gelagert ist. Die Gelenkwellen 8 laufen über alle in einer Querreihe befindlichen Segmente 5A. Jeder Bügel kann sich somit um die in Förderrichtung vordere und die in Förderrichtung nachlaufende Gelenkwelle 8 scharnierartig verschwenken. Die Gelenkwellen 8 sind an den seitlichen Rändern über eine Spanneinrichtung 9, beispielsweise einen Spannkeil, verspannt, so dass die auf der gleichen Gelenkwelle 8 sitzenden Bügel 7a bis 7d eng aneinandergepresst werden. Weiterhin sind zwischen den einzelnen Bügeln einer Querreihe die in Fig. 5 gezeigten Verankerungselemente 10 vorgesehen, die aus einem der Bügel ausgebogenen Blechstreifen 10a bestehen, der in eine im benachbarten Bügel vorgesehene Öffnung 10b eingreift. Durch diese Maßnahmen wird ein im Wesentlichen spalffreier Zusammenhalt der Bügel innerhalb einer Querreihe sichergestellt.

Auf jeder Gelenkwelle 8, jedoch nicht unbedingt in jedem Bügel, ist eine Abstützrolle 11 drehbar gelagert. Im dargestellten Ausführungsbeispiel sind lediglich die beiden äußeren Bügel 7a und 7d jeder Querreihe mit einer Abstützrolle 11 versehen. Die Abstützrollen 11 können jedoch auch regel- oder unregelmäßig, je nach Belastung, über das Traggitter 7 verteilt sein. Die Abstützrollen 11 laufen auf einem Träger 12, der im Innenband vorgesehen ist.

Das Förderband 5 enthält eine Förderfläche 13, auf der die Behälter 3 stehen, die aus einzelnen Metallblechen 14 besteht, die jeweils einem der Bügel des Traggitters 7 zugeordnet ist. Das Metallblech 14 enthält den auf ihn entfallenden Anteil 13a der Förderfläche 13 und einen Überlappungssteg 15, der im Wesentlichen senkrecht zur Förderfläche 13a verläuft und eine der beiden Gelenkwellen 8, die jedem der Bügel zugeordnet sind, übergreift. Die andere Gelenkwelle 8 des gleichen Bügels wird vom zugeordneten Metallblech 14 nicht überdeckt, so dass das dort benachbarte Metallblech mit seinem Steg 15 übergreifen kann.

Auf diese Weise bilden Bügel 7a bis 7d und die zugeordneten Metallbleche 14 jeweils ein Segment 5a, aus dem sich das Förderband 5 zusammensetzt, wobei die Metallbleche 14 benachbarter Segmente eng aneinander anstoßen, so dass sich zwischen ihnen keine Spalte auftun, die nicht für eine Gelenkbewegung um die Umlenkwalzen des endlosen Förderbandes 5 notwendig sind.

Das Metallblech 14 besteht bevorzugt aus Edelstahl und ist bevorzugt durchbrochen ausgebildet, beispielsweise in Form des gezeigten Lochbleches. Der Steg 15 kann aus dem gleichen Lochblech, einfach durch Herausbiegen geformt werden, kann jedoch auch gesondert aus einem undurchbrochenen Blech hergestellt und am Lochblech befestigt werden.

Im dargestellten Ausführungsbeispiel ist das gesamte Segment 5A mit Bügel, Metallblech 14 und Steg 15 aus einem entsprechend geformten Blechzuschnitt gebogen und verschweißt. Als Traggitter 7 kann jedoch auch beispielsweise das in der DE 10 2004 021 262 A1 beschriebene Traggitter eingesetzt werden. Andere Tragkonstruktionen sind denkbar.

Das Förderband 5 ist an den seitlichen, in Förderrichtung F verlaufenden Rändern mit Abstütz- und Führungsbügel 16 versehen, die sich nach außen wölben und federnd oder für Gleitreibung ausgebildet sein können. Die Abstütz- und Führungsbügel 16 sitzen zwischen jeweils zwei benachbarten Gelenkwellen 8 und sind dort bevorzugt zusammen mit der Spanneinrichtung 9 befestigt.

In Abwandlung des beschriebenen und gezeichneten Ausführungsbeispiels kann die Trägerstruktur auch andere Konstruktionen aufweisen. Statt Edelstahl können andere geeignete Metalle verwendet werden.

## Patentansprüche

1. Förderband (5), insbesondere für einen Pasteur (1), mit einer Förderfläche (13) und mit Abstützrollen (11), die unterhalb der Förderfläche (13) angeordnet sind und diese auf einem Träger (12) rollend abstützen, **gekennzeichnet durch** eine aus Metall gebildete Förderfläche (13), wobei die Förderfläche (13) aus aneinanderstoßenden Segmenten (5A) besteht, die im Wesentlichen spaltfrei nebeneinander liegen.

2. Förderband nach Anspruch 1, **dadurch gekennzeichnet, dass** die Förderfläche (13) aus einem Metallblech (14) besteht, das liegend angeordnet ist.

3. Förderband nach Anspruch 1 oder 2, **dadurch gekennzeichnet, dass** die Förderfläche (13) aus einem Lochblech aus Metall besteht.

4. Förderband nach einem der Ansprüche 1 bis 3, **dadurch gekennzeichnet, dass** die Abstützrollen in vorbestimmter Verteilung unterhalb der Förderfläche (13) angeordnet sind.

5. Förderband nach einem der Ansprüche 1 bis 4, **dadurch gekennzeichnet, dass** sich die Abstützrollen (11) in der Nähe der in Querrichtung äußeren Ränder befinden.

6. Förderband nach einem der Ansprüche 1 bis 5, **dadurch gekennzeichnet, dass** zwischen quer zur Förderrichtung (F) benachbarten Segmenten (5A) eine Querverbindungseinrichtung (10) vorgesehen ist.

7. Förderband nach Anspruch einem der Ansprüche 1 bis 6, **dadurch gekennzeichnet, dass** die Segmente (5A) auf wenigstens einer Gelenkwelle (8) sitzen, die die quer zur Förderrichtung (F) angeordneten Segmente (5A) verbindet, wobei an wenigstens einem Ende der Gelenkwelle (8) eine Spanneinrichtung (9) vorgesehen ist, die die Segmente (5A) gegeneinander presst.

8. Förderband nach einem der Ansprüche 1 bis 7, **dadurch gekennzeichnet, dass** jedes Segment (5A) einen Bereich eines Traggitters (7) und ein einen Teil (13a) der Förderfläche (13) enthaltenes Metallblech (14) aufweist.

9. Förderband nach einem der Ansprüche 1 bis 8, **dadurch gekennzeichnet, dass** jedes Segment (5A) einen Übergriffssteg (15) zum Verzahnen von in Förderrichtung (F) vor- und/oder nachlaufenden Segmente (5A) aufweist.

10. Förderband nach einem der Ansprüche 1 bis 9, **dadurch gekennzeichnet, dass** die Abstützrollen (11) auf Gelenkwellen (8) sitzen, die im Traggitter (7) gelagert sind.

11. Förderband nach einem der Ansprüche 1 bis 10, **dadurch gekennzeichnet, dass** an seitlichen Rändern des Förderbandes (5) Abstütz- und Führungsbügel (16) vorgesehen sind.

## Claims

1. Conveyor belt (5), in particular for a pasteuriser (1), with a conveyor surface (13) and with support rollers (11), which are arranged beneath the conveyor surface (13) and support it, rolling on a carrier (12), **characterised by** a conveyor surface (13) formed of metal, wherein the conveyor surface (13) consists of segments (5A) which butt together and which are located adjacently essentially without any gap.

2. Conveyor belt according to Claim 1, **characterised in that** the conveyor surface (13) consists of a metal sheet (14), which is arranged horizontally.

3. Conveyor belt according to Claim 1 or 2, **characterised in that** the conveyor surface (13) consists of a perforated sheet of metal.

4. Conveyor belt according to one of the Claims 1 to 3, **characterised in that** the support rollers are arranged in a predetermined distribution beneath the conveyor surface (13).

5. Conveyor belt according to one of the Claims 1 to 4, **characterised in that** the support rollers (11) are located in the vicinity of the outer edges in the transverse direction.

6. Conveyor belt according to one of the Claims 1 to 5, **characterised in that** a transverse joining device (10) is provided between segments (5A) transversely adjacent to the conveying direction (F).

7. Conveyor belt according to one of the Claims 1 to 6, **characterised in that** the segments (5A) are seated on at least one articulated shaft (8), which joins the segments (5A) arranged transversely to the conveying direction (F), wherein a clamping device (9), which presses the segments (5A) together, is provided on at least one end of the articulated shaft (8)

8. Conveyor belt according to one of the Claims 1 to 7, **characterised in that** each segment (5A) has a region of a carrying grid (7) and a metal sheet (14) containing a part (13a) of the conveyor surface (13).

9. Conveyor belt according to one of the Claims 1 to 8, **characterised in that** each segment (5A) has an overlapping ridge (15) for interleaving segments (5A) preceding and / or following in the conveying direction (F).

10. Conveyor belt according to one of the Claims 1 to 9, **characterised in that** the support rollers (11) are seated on articulated shafts (8), which are supported in the carrying grid (7).

11. Conveyor belt according to one of the Claims 1 to 10, **characterised in that** support and guide straps (16) are provided on the sideward edges of the conveyor belt (5).

## Revendications

1. Bande transporteuse (5), notamment destinée à un pasteurisateur (1), comprenant une surface de transport (13) et des rouleaux de soutien (11), qui sont agencés sous la surface de transport (13) et assurent l'appui roulant de celle-ci sur un support (12), **caractérisée par** une surface de transport (13) réalisée en métal, la surface de transport (13) étant constituée de segments (5A) mutuellement adjacents, qui sont placés, sensiblement sans interstices, les uns à côté des autres.

2. Bande transporteuse selon la revendication 1, **caractérisée en ce que** la surface de transport (13) est réalisée en une tôle métallique (14) agencée à plat.

3. Bande transporteuse selon la revendication 1 ou la revendication 2, **caractérisée en ce que** la surface de transport (13) est réalisée en une tôle perforée en métal.

4. Bande transporteuse selon l'une des revendications 1 à 3, **caractérisée en ce que** les rouleaux de soutien sont agencés selon une répartition prédéterminée sous la surface de transport (13).

5. Bande transporteuse selon l'une des revendications 1 à 4, **caractérisée en ce que** les rouleaux de soutien (11) se trouvent à proximité des bords situés à l'extérieur dans la direction transversale.

6. Bande transporteuse selon l'une des revendications 1 à 5, **caractérisée en ce qu'**entre des segments (5A) voisins transversalement à la direction de transport (F), il est prévu un dispositif de liaison transversale (10).

7. Bande transporteuse selon l'une des revendications 1 à 6, **caractérisée en ce que** les segments (5A) sont placés sur au moins un arbre d'articulation (8), qui relie les segments (5A) agencés transversalement à la direction de transport (F), et à au moins une extrémité de l'arbre d'articulation (8) est prévu un dispositif de serrage (9), qui presse les segments (5A) les uns contre les autres.

8. Bande transporteuse selon l'une des revendications 1 à 7, **caractérisée en ce que** chaque segment (5A) comprend une zone d'un treillis de support (7) et une tôle métallique (14) comportant une partie (13a) de la surface de transport (13).

9. Bande transporteuse selon l'une des revendications 1 à 8, **caractérisée en ce que** chaque segment (5A) présente une nervure d'empiètement (15) pour engrener avec des segments (5A) suivants et/ou précédents en se référant à la direction de transport (F).

10. Bande transporteuse selon l'une des revendications 1 à 9, **caractérisée en ce que** les rouleaux de soutien (11) sont placés sur des arbres d'articulation (8), qui sont montés dans le treillis de support (7).

11. Bande transporteuse selon l'une des revendications 1 à 10, **caractérisée en ce que** sur des bords latéraux de la bande de transport (5) sont prévus des étriers d'appui et de guidage (16).
